# EUROPEAN PATENT APPLICATION

(11) **EP 4 647 982 A1**
(43) Date of publication of application: **12.11.2025**
(21) Application number: 24847161.7
(22) Date of filing: 04.03.2024
(51) Int. Cl.: G06Q 10/063, G06Q 10/0639, G06Q 50/20, G09B 7/00

(54) **CLASS EVALUATION METHOD AND APPARATUS, DEVICE, AND MEDIUM**

(71) Applicant: Guangzhou Shiyuan Electronic Technology Company Limited, Guangzhou, Guangdong 510530 (CN); Guangzhou Shiyuan Artificial Intelligence Innovation Research Institute Co., Ltd., Guangzhou, Guangdong 510530 (CN); Guangzhou Shirui Electronics Co., Ltd., Guangzhou, Guangdong 510663 (CN)
(72) Inventor: HUANG, Jinyu, Guangzhou, Guangdong 510530 (CN); LIU, Chengbiao, Guangzhou, Guangdong 510530 (CN); YUAN, Fangzheng, Guangzhou, Guangdong 510530 (CN); LIU, Xiaoxiang, Guangzhou, Guangdong 510530 (CN)
(74) Representative: Grünecker Patent- und Rechtsanwälte PartG mbB
(86) International application number: PCT/CN2024/079963
(87) International publication number: WO 2025/184780

(57) **Abstract**

The present disclosure relates to a classroom assessment method, apparatus, device, and medium. The present disclosure relates to the field of teaching assessment technology. The method comprises: acquiring classroom data and classroom objective information of a classroom to be assessed; converting the classroom data into a text to be input; receiving an objective analysis instruction of the classroom to be assessed; inputting the text to be input and the classroom objective information into a preset model, so that the preset model processes the text to be input and the classroom objective information based on the objective analysis instruction, and outputs an assessment result of the classroom to be assessed. By adopting this technical solution, it is possible to achieve a purpose of executing a Q&A-dialogue analysis task, a classroom-interaction analysis task, and a curriculum standard implementation and analysis task in the classroom without the need for manual listening, thereby improving the efficiency of classroom assessment, and this scheme is classroom assessment based on the classroom objective information, thereby ensuring the objectivity and accuracy of the assessment results.

## Description

### FIELD

The present disclosure relates to the field of teaching assessment technology, and in particular to a classroom assessment method, apparatus, device, and medium.

### BACKGROUND

During the teaching course, classroom interactive behavior (such as classroom questioning) may prompt students to pay attention to the key and difficult points in the textbook, and deepen their understanding of knowledge. In the process of classroom interaction, a question that is relevant to the teaching objectives and highly inspiring is crucial in the teaching course. Therefore, in classroom observation, assessing classroom performance of teachers has become very important.

In related technologies, teacher classroom assessment is often to design a course questionnaire or scale by various schools based on relevant theories before class, and organize teachers or instructors who specialize in classroom observation online or offline to listen to the class. Finally, the teacher or instructor who observes the classroom summarizes and discusses the classroom interaction behavior of the teacher after class based on the classroom materials collected from the classroom context, and draws recommendations for the current classroom.

However, the current classroom assessment method is performed manually by professional classroom observation teachers, which takes a long time. At the same time, different observation teachers may have different opinions on the classroom interaction behavior of the same teacher. Therefore, when using relevant technologies for classroom assessment, there are problems of low assessment efficiency and strong subjectivity in assessment conclusions.

### SUMMARY

According to embodiments of the present disclosure, the purpose is to provide a classroom assessment method, apparatus, device, and medium that can solve the problems of low assessment efficiency and strong subjectivity in assessment conclusions when using related technologies for classroom interactive behavior assessment. By converting the classroom data into the text to be input, receiving an objective analysis instruction of the classroom to be assessed, and inputting the text to be input and the classroom objective information into a preset model, so that the preset model processes the text to be input and the classroom objective information based on the objective analysis instruction, and outputs an assessment result of the classroom to be assessed, it is possible to achieve a purpose of executing a Q&A-dialogue analysis task, a classroom-interaction analysis task, and a curriculum standard implementation and analysis task in the classroom without the need for manual listening, thereby improving the efficiency of classroom assessment, and this scheme is based on both the text to be input converted from the classroom data and the classroom objective information, for the classroom assessment thereby ensuring the objectivity and accuracy of the assessment results.

According to a first aspect of the present disclosure, a classroom assessment method is provided, including:
acquiring classroom data and classroom objective information of a classroom to be assessed; where the classroom data includes audio data and/or video data; the classroom objective information includes teaching objective information and curriculum standard information;
converting the classroom data into a text to be input;
receiving an objective analysis instruction of the classroom to be assessed; where the objective analysis instruction include a Q&A-dialogue analysis instruction, a classroom-interaction analysis instruction, and a curriculum standard implementation analysis instruction; and
inputting the text to be input and the classroom objective information into a preset model, so that the preset model processes the text to be input and the classroom objective information based on the objective analysis instruction, and outputs an assessment result of the classroom to be assessed; where the preset model is obtained by taking educational scenario corpus as a training sample and taking a main task module for analyzing Q&A dialogue, a main task module for analyzing classroom interaction and a main task module for analyzing curriculum standard implementation as jointly trained main tasks to perform supervised fine-tuning training; the main task module for analyzing Q&A dialogue is configured to respond to the Q&A-dialogue analysis instruction, the main task module for analyzing classroom interaction is configured to respond to the classroom-interaction analysis instruction, and the main task module for analyzing curriculum standard implementation is configured to respond to the curriculum standard implementation analysis instruction.

According to this embodiment, by converting the classroom data of the classroom to be assessed into the text to be input, receiving an objective analysis instruction of the classroom to be assessed, and inputting the text to be input and the classroom objective information into a preset model, so that the preset model processes the text to be input and the classroom objective information based on the objective analysis instruction, and outputs an assessment result of the classroom to be assessed, it is possible to achieve a purpose of executing a Q&A-dialogue analysis task, a classroom-interaction analysis task, and a curriculum standard implementation and analysis task in the classroom without the need for manual listening, thereby improving the efficiency of classroom assessment, and this scheme is based on both the text to be input converted from the classroom data and the classroom objective information, for the classroom assessment, thereby ensuring the objectivity and accuracy of the assessment results.

According to one embodiment, the inputting the text to be input and the classroom objective information into a preset model, so that the preset model processes the text to be input and the classroom objective information based on the objective analysis instruction, and outputs an assessment result of the classroom to be assessed includes:
when confirming that the received objective analysis instruction is a Q&A-dialogue analysis instruction, inputting the text to be input and teaching objective information into the preset model, so that in response to the Q&A-dialogue analysis instruction, the preset model executes the main task module for analyzing Q&A dialogue based on the text to be input and the teaching objective information, and outputs the assessment result of the classroom to be assessed through the main task module for analyzing Q&A dialogue;
when confirming that the received objective analysis instruction is a classroom-interaction analysis instruction, inputting the text to be input and teaching objective information into the preset model, so that in response to the classroom-interaction analysis instruction, the preset model executes the main task module for analyzing classroom interaction based on the text to be input and the teaching objective information, and outputs the assessment result of the classroom to be assessed through the main task module for analyzing classroom interaction; and
when confirming that the received objective analysis instruction is a curriculum standard implementation analysis instruction, inputting the text to be input and the curriculum standard information into the preset model, so that in response to the curriculum standard implementation analysis instruction, the preset model executes the main task module for analyzing curriculum standard implementation based on the text to be input and the curriculum standard information, and outputs the assessment result of the classroom to be assessed through the main task module for analyzing curriculum standard implementation.

The beneficial effect of this embodiment is that, based on different types of received objective analysis instructions, the text to be input and the classroom objective information are inputted into the preset model, so that in response to different objective analysis instructions, the preset model outputs the assessment results of the classroom to be assessed through the main task module for analyzing Q&A dialogue, the main task module for analyzing classroom interaction and the main task module for analyzing curriculum standard implementation. Such a purpose can be achieved that the classroom to be assessed is respectively assessed correspondingly based on the assessment tasks in different types of main task modules, thereby improving pertinence of assessing classroom interactive behavior, and enhancing the user experience of viewing assessment results.

According to one embodiment, the when confirming that the received objective analysis instruction is a Q&A-dialogue analysis instruction, inputting the text to be input and teaching objective information into the preset model, so that in response to the Q&A-dialogue analysis instruction, the preset model executes the main task module for analyzing Q&A dialogue based on the text to be input and the teaching objective information, and outputs the assessment result of the classroom to be assessed through the main task module for analyzing Q&A dialogue includes:
when confirming that the received objective analysis instruction is a Q&A-dialogue analysis instruction, the preset model responds to the Q&A-dialogue analysis instruction, so that the preset model is in a state of waiting to execute the objective assessment task under various types of assessment dimensions in the main task module for analyzing Q&A dialogue;
determining the objective assessment task; and
inputting the text to be input and the teaching objective information into the preset model, so that the main task module for analyzing Q&A dialogue executes the objective assessment task based on the text to be input and the teaching objective information, and outputs the assessment result of the classroom to be assessed.

The beneficial effect of this embodiment is that, after confirming that the Q&A-dialogue analysis instruction is received and the preset model responds to the instruction, the preset model is in a state of waiting to execute the main task module for analyzing Q&A dialogue. At this time, the objective assessment tasks under each type of assessment dimension in the main task module for analyzing Q&A dialogue are determined, so that the preset model executes the objective assessment task based on the text to be input and the teaching objective information, which can achieve the effect of analyzing teacher classroom questioning based on different assessment dimensions.

In an embodiment, the main task module for analyzing Q&A dialogue includes an overall assessment subtask module and a local assessment subtask module;
the determining the objective assessment task includes:
acquiring a first type of assessment prompt instruction; where the first type of assessment prompt instruction is used to prompt the preset model to output the assessment result of the classroom to be assessed based on an assessment dimension of questioning validity analysis; the assessment dimension of questioning validity analysis includes performing assessment on validity of the teacher questioning in the classroom to be assessed;
determining that a first overall subtask in the overall assessment subtask module and a first local subtask in the local assessment subtask module jointly constitute the objective assessment task based on the first type of assessment prompt instruction; where the first overall subtask is used to perform overall assessment on an entirety validity of all teacher questioning in the classroom to be assessed, and the first local subtask is used to make a specific judgment on the validity of each teacher question in the classroom to be assessed;
   and/or,
acquiring a second type of assessment prompt instruction; where the second type of assessment prompt instruction is used to prompt the preset model to output the assessment result of the classroom to be assessed based on an assessment dimension of knowledge objective; the assessment dimension of the knowledge objective includes performing assessment on correlation between teacher questioning and teaching objective in the classroom to be assessed;
determining that the second overall subtask in the overall assessment subtask module and the second local subtask in the local assessment subtask module jointly constitute the objective assessment task based on the second type of assessment prompt instruction; where the second overall subtask is used to perform overall assessment on a preset knowledge objective in the classroom to be assessed, and the second local subtask is used to perform specific assessment on the correlation between teacher question and teaching objective in the classroom to be assessed;
   and/or,
acquiring a third type of assessment prompt instruction as the objective assessment task; where the third type of assessment prompt instruction is used to prompt the preset model to output the assessment result of the classroom to be assessed based on an assessment dimension of questioning avoidance; where the assessment dimension of questioning avoidance include finding out teacher questioning that may be avoided in the classroom to be assessed;
determining that a first local subtask in the local assessment subtask module and a second local subtask in the local assessment subtask module jointly constitute the objective assessment task based on the third type of assessment prompt instruction; where the first local subtask is used to make a specific judgment on the validity of each teacher questioning in the classroom to be assessed, and the second local subtask is used to make specific assessment on the correlation between teacher questioning and teaching objective in the classroom to be assessed;
   and/or,
acquiring a fourth type of assessment prompt instruction as the objective assessment task; where the fourth type of assessment prompt instruction is used to prompt the preset model to output the assessment result of the classroom to be assessed based on the assessment dimension of questioning optimization; the assessment dimension of questioning optimization include finding out teacher questioning that may be optimized in the classroom to be assessed;
determining that a third overall subtask in the overall assessment subtask module and a third local subtask in the local assessment subtask module jointly constitute an objective assessment task based on the fourth type of assessment prompt instruction; where the third overall subtask is used to propose an overall optimization suggestion for teacher questioning in the classroom to be assessed, and the third local subtask is used to optimize and rewrite teacher questioning in the classroom to be assessed.

The beneficial effect of this embodiment is that, by simultaneously or selectively assessing contents of classroom Q&A dialogues in the assessment classroom based on different assessment dimensions and assessment scopes, it is possible to assess the teacher questioning in the classroom to be assessed from different dimensions under the premise of using a unified model, which avoids a problem of using classroom data to train separately for different assessment dimensions and isolating the training results of different assessment dimensions in related technologies. It is possible to effectively reduce a large amount of repetitive model training work, strengthen the correlation between training tasks of different assessment dimensions, and further improve the objectivity of classroom assessment.

In an embodiment, the main task module for analyzing Q&A dialogue includes an overall assessment subtask module and a local assessment subtask module; during a process of performing supervised fine-tuning training on the main task module for analyzing Q&A dialogue, the preset model respectively processes the classroom text containing the teaching objective and the teacher questioning in the educational scenario corpus based on the overall assessment subtask module and the local assessment subtask module to output assessment result for the classroom text.

The beneficial effect of this embodiment is that, by setting up the main task module for analyzing Q&A dialogue, which includes the overall assessment subtask module and the local assessment subtask module, and performing supervised training on the overall assessment subtask module and the local assessment subtask module based on the educational scenario corpus, it is possible to achieve the purpose of performing overall and specific assessment on teacher Q&A questioning and answers respectively, and improve the accuracy of the output assessment results of the preset model.

In an embodiment, the overall assessment subtask module includes a first overall subtask, a second overall subtask, and a third overall subtask; the first overall subtask is used to perform overall assessment on the overall validity of all teacher questioning in the classroom text during the process of supervised fine-tuning training; the second overall subtask is used to perform overall assessment on the preset knowledge objective in the classroom text during the process of supervised fine-tuning training; the third overall subtask is used to propose an overall optimization suggestion for teacher questioning in the classroom text during the process of supervised fine-tuning training; the local assessment subtask module includes a first local subtask, a second local subtask, and a third local subtask; the first local subtask is used to make a specific judgment on the validity of various teacher questioning in the classroom text during the process of supervised fine-tuning training; the second local subtask is used to perform specific assessment on the correlation between the teacher questioning and the teaching objective in the classroom text during the process of supervised fine-tuning training; the third local subtask is used to optimize and rewrite teacher questioning in the classroom text during the process of supervised fine-tuning training.

The beneficial effect of this embodiment is that, by setting the overall assessment subtask module to include three overall subtasks, and setting the local assessment subtask module to include three local subtasks, a total of six subtasks including three overall subtasks and three local subtasks are jointly perform supervised training. During the training process, the first overall subtask and the first local subtask work jointly cooperate to output assessment results under the dimension of questioning validity analysis, the second overall subtask and the second local subtask work jointly cooperate to output assessment results under the dimension of knowledge objective, and the third overall subtask and the third local subtask work jointly cooperate to output assessment results under the dimension of questioning optimization. At the same time, the first local subtask and the second local subtask work jointly cooperate to output assessment results under the dimension of questioning avoidance, that is, all subtasks jointly executed in the overall assessment subtask module and the local assessment subtask module may output assessment results for teacher questioning in the classroom to be assessed based on four assessment dimensions: questioning validity analysis, knowledge objective, questioning avoidance, and questioning optimization, thereby ensuring the objectivity of classroom assessment and further improving the comprehensiveness of teacher classroom questioning analysis.

In an embodiment, the acquiring classroom data and classroom objective information of a classroom to be assessed includes:
acquiring the classroom data of the classroom to be assessed; and
querying the classroom objective information that matches the classroom data from a preset database, or inputting the classroom data into a preset chapter matching model, so that the chapter matching model outputs classroom objective information that matches the classroom data.

The beneficial effect of this embodiment is that, by querying the classroom objective information that matches the classroom data in a preset database, or inputting the classroom data into the preset chapter matching model, the chapter matching model outputs the classroom objective information that matches the classroom data, which can improve the efficiency of determining the classroom objective information.

In an embodiment, the converting the classroom data into a text to be input includes:
converting the classroom data into the classroom text;
extracting teacher questioning text from the classroom text; and
taking the classroom text and the teacher questioning text as the text to be input.

The beneficial effect of this embodiment is that, by converting the classroom data into the classroom text, extracting the teacher questioning text from the classroom text, and taking the classroom text and the teacher questioning text as the text to be input, it is conducive to subsequently perform specific analysis and overall analysis combined with context on teacher questioning, respectively, thereby improving the comprehensiveness of the text to be input.

In an embodiment, the extracting teacher questioning text from the classroom text includes:
recognizing a dialogue role having the most dialogues in the classroom text;
determining the dialogue role having the most dislogues as a teacher role;
extracting all the dialogue contents of the teacher role; and
screening the teacher questioning text from all the dialogue contents.

The beneficial effect of this embodiment is that, by determining the dialogue role having the most dialogues in the classroom text as the teacher role, and screening the teacher questioning text from all the dialogue contents, the steps of extracting teacher questioning text can be simplified, and the efficiency and accuracy of extracting teacher questioning text can be improved.

In an embodiment, the screening the teacher questioning text from all the dialogue contents includes:
recognizing a basic question sentence in all the dialogue contents; and
performing de-noising operation on the basic question sentence to obtain the teacher questioning text.

The beneficial effect of this embodiment is that, by recognizing a basic question sentence in all the dialogue contents; and performing de-noising operation on the basic question sentence to obtain the teacher questioning text, it is possible to achieve a purpose of further refining the question text and avoid the influence of subsequent basic questions on the assessment results of the classroom to be assessed.

According to a second aspect of the present disclosure, a classroom assessment apparatus is provided, including:
a data acquiring module, configured to acquire classroom data and classroom objective information of a classroom to be assessed; where the classroom data includes audio data and/or video data; the classroom objective information includes teaching objective information and curriculum standard information;
a data converting module, configured to convert the classroom data into a text to be input;
an instruction receiving module, configured to receive an objective analysis instruction of the classroom to be assessed; where the objective analysis instruction include a Q&A-dialogue analysis instruction, a classroom-interaction analysis instruction, and a curriculum standard implementation analysis instruction; and
an assessing module, configured to input the text to be input and the classroom objective information into a preset model, so that the preset model processes the text to be input and the classroom objective information based on the objective analysis instruction, and outputs an assessment result of the classroom to be assessed; where the preset model is obtained by taking educational scenario corpus as a training sample and taking a main task module for analyzing Q&A dialogue, a main task module for analyzing classroom interaction and a main task module for analyzing curriculum standard implementation as jointly trained main tasks to perform supervised fine-tuning training; the main task module for analyzing Q&A dialogue is configured to respond to the Q&A-dialogue analysis instruction, the main task module for analyzing classroom interaction is configured to respond to the classroom-interaction analysis instruction, and the main task module for analyzing curriculum standard implementation is configured to respond to the curriculum standard implementation analysis instruction.

According to this embodiment, by converting the classroom data of the classroom to be assessed into the text to be input, receiving an objective analysis instruction of the classroom to be assessed, and inputting the text to be input and the classroom objective information into a preset model, so that the preset model processes the text to be input and the classroom objective information based on the objective analysis instruction, and outputs an assessment result of the classroom to be assessed, it is possible to achieve a purpose of executing a Q&A-dialogue analysis task, a classroom-interaction analysis task, and a curriculum standard implementation and analysis task in the classroom without the need for manual listening, thereby improving the efficiency of classroom assessment, and this scheme is based on both the text to be input converted from the classroom data and the classroom objective information, for the classroom assessment thereby ensuring the objectivity and accuracy of the assessment results.

According to a third aspect of the present disclosure, an electronic device is provided, including a processor, a memory, and a program or instruction stored on the memory and executable on the processor, where when the program or instruction is executed by the processor, the steps of the method of the first aspect are implemented.

According to a fourth aspect of the present disclosure, a readable storage medium is provided, on which a program or instruction is stored, where when being executed by a processor, the program or instruction implements the steps of the method of the first aspect.

According to a fifth aspect of the present disclosure, a chip is provided, including a processor and a communication interface, where the communication interface is coupled to the processor, and the processor is used to run a program or instruction to implement the method of the first aspect.

In embodiments of the present disclosure, classroom data and classroom objective information is acquired for a classroom to be assessed; where the classroom data includes audio data and/or video data; the classroom objective information includes teaching objective information and curriculum standard information; the classroom data is converted into a text to be input; an objective analysis instruction is received for the classroom to be assessed; where the objective analysis instruction include a Q&A-dialogue analysis instruction, a classroom-interaction analysis instruction, and a curriculum standard implementation analysis instruction; and the text to be input and the classroom objective information is input into a preset model, so that the preset model processes the text to be input and the classroom objective information based on the objective analysis instruction, and outputs an assessment result of the classroom to be assessed; where the preset model is obtained by taking educational scenario corpus as a training sample and taking a main task module for analyzing Q&A dialogue, a main task module for analyzing classroom interaction and a main task module for analyzing curriculum standard implementation as jointly trained main tasks to perform supervised fine-tuning training; the main task module for analyzing Q&A dialogue is configured to respond to the Q&A-dialogue analysis instruction, the main task module for analyzing classroom interaction is configured to respond to the classroom-interaction analysis instruction, and the main task module for analyzing curriculum standard implementation is configured to respond to the curriculum standard implementation analysis instruction. Through the above classroom assessment methods, the problem of low assessment efficiency and strong subjectivity in assessment conclusions when using relevant technologies for classroom interactive behavior assessment can be solved. By converting the classroom data of the classroom to be assessed into the text to be input, receiving an objective analysis instruction of the classroom to be assessed, and inputting the text to be input and the classroom objective information into a preset model, so that the preset model processes the text to be input and the classroom objective information based on the objective analysis instruction, and outputs an assessment result of the classroom to be assessed, it is possible to achieve a purpose of executing a Q&A-dialogue analysis task, a classroom-interaction analysis task, and a curriculum standard implementation and analysis task in the classroom without the need for manual listening, thereby improving the efficiency of classroom assessment, and this scheme is based on both the text to be input converted from the classroom data and he classroom objective information, for the classroom assessment, thereby ensuring the objectivity and accuracy of the assessment results.

### BRIEF DESCRIPTION OF THE DRAWINGS

Fig. 1 is a flowchart of a classroom assessment method according to an embodiment of the present disclosure.
Fig. 2 is a flowchart of a classroom assessment method according to an embodiment of the present disclosure.
Fig. 3 is a user interface according to an embodiment of the present disclosure.
Fig. 4 is a flowchart of classroom questioning assessment according to an embodiment of the present disclosure.
Fig. 5 is a diagram of a structure of a classroom assessment apparatus according to an embodiment of the present disclosure.
Fig. 6 is a diagram of a structure of an electronic device according to an embodiment of the present disclosure.

### DESCRIPTION OF THE PREFERRED EMBODIMENTS

In order to make the purpose, technical solution, and advantages of the present disclosure clearer, further detailed descriptions of specific embodiments of the present disclosure will be provided below in conjunction with the accompanying drawings. It may be understood that the specific embodiments described here are only intended to explain the present disclosure and not to limit it. Furthermore, it should be noted that for ease of description, only the relevant parts of the present disclosure are shown in the accompanying drawings, rather than the entire content. Before discussing the exemplary embodiments in more detail, it should be mentioned that some exemplary embodiments are described as processes or methods depicted as flowcharts. Although flowcharts describe various operations (or steps) as sequential processing, many of them may be implemented in parallel, concurrently, or simultaneously. In addition, the order of each operation may be rearranged. When the operation is completed, the process may be terminated, but there may also be additional steps not included in the drawings. The processing may correspond to methods, functions, procedures, subroutines, subroutines, etc.

The technical solutions in the embodiments of the present disclosure will be clearly and completely described below with reference to the accompanying drawings in the embodiments of the present disclosure. Obviously, the described embodiments are only some of the embodiments of the present disclosure, but not all of the embodiments. Based on the embodiments in the present disclosure, all other embodiments obtained by those skilled in the art without creative efforts fall within the scope of protection of the present disclosure.

The terms "first", "second", etc. in the description and claims of the present disclosure are used to distinguish similar objects and not to describe a specific order or sequence. It should be understood that the data used in this way may be interchanged in appropriate circumstances, so that the embodiments of the present disclosure may be implemented in an order other than those illustrated or described herein, and the objects distinguished by "first", "second", etc. are usually of the same class, without limiting the number of objects, for example, the first object may be one or multiple. In addition, in the description and claims, "and/or" represents at least one of the connected objects, and the character "/" generally indicates a "or" relationship between the related objects.

With reference to the accompanying drawings, the classroom assessment method, apparatus, device, and medium according to the embodiments of the present disclosure will be described in detail through examples and their application scenarios.

In related technologies, for teacher classroom assessment, schools often design a course questionnaire or scale by various schools based on relevant theories before class, and organize teachers or instructors who specialize in classroom observation online or offline to listen to the class. Finally, the teacher or instructor who observes the classroom summarizes and discusses the classroom interaction behavior of the teacher after class based on the classroom materials collected from the classroom context, and draws recommendations for the current classroom. However, the current classroom assessment method mainly relies on professional classroom observation and manual assessment by teachers, which takes a long time. At the same time, different observation teachers may have different opinions on the classroom interaction behavior of the same teacher. Therefore, when using relevant technologies for classroom assessment, there are problems of low assessment efficiency and strong subjectivity in assessment conclusions.

According to this scheme, by converting the classroom data of the classroom to be assessed into the text to be input, receiving an objective analysis instruction of the classroom to be assessed, and inputting the text to be input and the classroom objective information into a preset model, so that the preset model processes the text to be input and the classroom objective information based on the objective analysis instruction, and outputs an assessment result of the classroom to be assessed, it is possible to achieve a purpose of executing a Q&A-dialogue analysis task, a classroom-interaction analysis task, and a curriculum standard implementation and analysis task in the classroom without the need for manual listening, thereby improving the efficiency of classroom assessment, and this scheme is based on both the text to be input converted from the classroom data and the classroom objective information, for the classroom assessment, thereby ensuring the objectivity and accuracy of the assessment results.

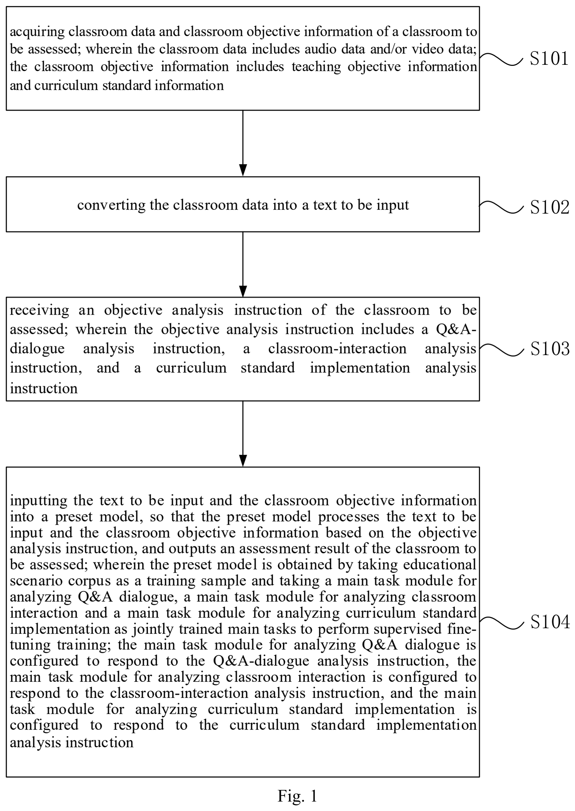

Fig. 1 is a flowchart of a classroom assessment method according to an embodiment of the present disclosure. As shown in Fig. 1, the classroom assessment method specifically includes the following steps.

S101, acquiring classroom data and classroom objective information of a classroom to be assessed; where the classroom data includes audio data and/or video data; the classroom objective information includes teaching objective information and curriculum standard information.

Firstly, the application scenario of this scheme may be a scenario of analyzing and assessing the teacher's Q&A dialogue, classroom interaction, and implementation of curriculum standards during the teaching course.

Based on the above usage scenarios, it may be understood that an executing subject of the present disclosure may be a server for processing classroom data and assessing teacher classroom interaction behavior, and the server may include servers, terminal devices (such as interactive boards, computers, intelligent terminals, mobile terminals, etc.), etc.

The classroom interactive behavior may be a behavior of asking students questions by teachers, having conversations, and teaching courses during the teaching course.

The classroom to be assessed refers to the classroom waiting for assessment, which may be a classroom of the teacher interactive behavior or the classroom of the teacher teaching content. The classroom data of the classroom to be assessed may be recorded data or live data of the classroom to be assessed. The classroom data may be the entire classroom data of the classroom to be assessed, or may be the selected classroom segment data for the classroom to be assessed.

The classroom data includes audio data and/or video data. The audio data may include both teacher audio data and student audio data. The video data may include both teacher video data and student video data.

The classroom objective information includes teaching objective information and curriculum standard information. The teaching objective information may be expected results of teaching activities, which is the concretization of educational goals, teaching objectives, and curriculum objective, as well as the requirements and standards that teachers need to achieve to complete teaching tasks. In classroom teaching of a certain subject, teachers need to determine detailed teaching objectives based on curriculum objective and teaching content in order to select teaching content and determine teaching validity. Curriculum standard information may be a teaching guidance document that specifies the nature of a subject course, curriculum objective, content objectives, and implementation suggestions. Compared with the teaching syllabus, the curriculum standard provides more detailed and clear explanations of the basic concepts, objectives, and implementation suggestions of the course, and proposes basic learning requirements for all students for example, the new curriculum standards for nine-year compulsory education.

In an embodiment, classroom data of the classroom to be assessed may be received through a data transmission interface, and the classroom objective information of the current classroom may be acquired by reading the classroom data pre-stored or uploaded by the teacher. The classroom data includes audio data and/or video data.

In a feasible implementation, the acquiring classroom data and classroom objective information of a classroom to be assessed includes:
acquiring the classroom data of the classroom to be assessed; and
querying the classroom objective information that matches the classroom data from a preset database, or inputting the classroom data into a preset chapter matching model, so that the chapter matching model outputs classroom objective information that matches the classroom data.

The preset database may be a classroom database constructed based on pre-collected educational language materials, or a database constructed based on classroom materials uploaded by users. The preset database may store classroom objective information that matches the classroom data of each class or classroom objective information that matches the classroom type of each class in the form of a list. The classroom type may be the type corresponding to the classroom content, for example: lectures, demonstration classes, practice classes, experimental classes, and review classes. The classroom objective information that matches the classroom data may be classroom objective information corresponding to at least one of the classroom name, classroom type, and subject direction in the classroom data. The chapter matching model may be a model used to match classroom objective information with classroom data.

In an embodiment, classroom data of the classroom to be assessed may be acquired through a preset interface. Classroom objective information that matches the classroom data may be queried in a preset database based on at least one of the classroom name, classroom type, and subject direction in the classroom data. Alternatively, the classroom data may be input into a preset chapter matching model, so that the chapter matching model determines and outputs classroom objective information that matches the classroom data through keyword extraction and similarity matching.

In this embodiment of the present disclosure, by querying the classroom objective information that matches the classroom data in a preset database, or inputting the classroom data into the preset chapter matching model, the chapter matching model outputs the classroom objective information that matches the classroom data, which can improve the efficiency of determining the classroom objective information.

S102, converting the classroom data into a text to be input.

The text to be input may be a text obtained by converting the classroom data into text, the teacher questioning text extracted from the classroom text, or a text that includes both the classroom text and the teacher questioning text. The classroom text may be a text obtained by text conversion of the classroom data. The text to be input may include teacher statements, teacher questioning statements, student statements, and student questioning statements during teaching. The beginning of each sentence text in the text to be input may include a role prefix of the speaker. For example, speaker A: "Boys and girls, what kind of thoughts and emotions does this passage express for the author; Speaker B: "It expresses the author's homesickness. It is understandable that different speakers expressing various sentence texts may be distinguished based on the role prefix mentioned.

In an embodiment, speech recognition techniques such as Automatic Speech Recognition (ASR) may be used to convert the audio data in the classroom data into text to be input.

In a feasible embodiment, the converting the classroom data into a text to be input includes:
converting the classroom data into the classroom text;
extracting teacher questioning text from the classroom text; and
taking the classroom text and the teacher questioning text as the text to be input.

The classroom text may be a text obtained by text conversion of the classroom data. The teacher questioning text may be teacher questioning statements in the classroom text.

In an embodiment, the classroom data may be a text obtained by text conversion of the classroom data. The beginning of each sentence text in the text to be input may include a role prefix of the speaker, and the end of each sentence text may include punctuation marks. The appellative nouns may be recognized in each sentence text of the classroom text, whether the role prefix of each sentence text is a teacher role is determined based on the appellative nouns, and then the sentence text with the role prefix as a teacher role and the punctuation mark at the end of the sentence text is determined as a teacher questioning text in the classroom text. For example, if the appellative noun in the sentence text is recognized as "Ms./Mr./Mrs.", the role prefix corresponding to the sentence text is determined to be "student". If the title noun in the sentence text is recognized as "XX ", the role prefix corresponding to the sentence text is determined to be "teacher". The classroom text and the teacher questioning text are taken as the text to be input.

According to the embodiments of the present disclosure, by converting the classroom data into the classroom text, extracting the teacher questioning text from the classroom text, and taking the classroom text and the teacher questioning text as the text to be input, it is conducive to subsequently perform specific analysis and overall analysis combined with context on teacher questioning, respectively, thereby improving the comprehensiveness of the text to be input.

In a feasible implementation, the extracting teacher questioning text from the classroom text includes:
recognizing a dialogue role having the most dialogues in the classroom text;
determining the dialogue role having the most dialogues as a teacher role;
extracting all the dialogue contents of the teacher role; and
screening the teacher questioning text from all the dialogue contents.

In an embodiment, the dialogue role having the most dialogues in the classroom text may be recognized and counted based on the frequency of appearance of the role prefixes of each speaker in the classroom text. Since the teaching course mainly relies on teacher statements and questioning, the role with the highest number of dialogue may be recognized as the teacher role. All dialogue contents of the teacher role are extracted based on the role prefix corresponding to the teacher role, and the teacher questioning text in the dialogue content is screened based on punctuation marks at the end of each sentence text.

In this embodiment of the present disclosure, by determining the dialogue role having the most dialogues in the classroom text as the teacher role, and screening the teacher questioning text from all the dialogue contents, the steps of extracting teacher questioning text can be simplified, and the efficiency and accuracy of extracting teacher questioning text can be improved.

In a feasible implementation, the screening the teacher questioning text from all the dialogue contents includes:
recognizing a basic question sentence in all the dialogue contents; and
performing de-noising operation on the basic question sentence to obtain the teacher questioning text.

Basic questions may be overly simple and/or repeatedly emphasized questions, for example, types of questions such as "right or wrong" and "yes or no". The de-noising operation may be the operation of deleting the basic question.

In an embodiment, the basic questions in all dialogue contents may be recognized based on punctuation marks at the end of each sentence text and keyword search. For example, words such as "right or wrong" and "yes or no" are used as keywords, sentence texts with search keywords are searched for in all dialogue content, whether the ending punctuation of the searched sentence text is a question mark is recognized, and the sentence text with the ending punctuation is determined as a question mark as the basic question. A deletion operation is performed on the basic questions in all the dialogue content, and the sentences with period punctuation at the end of the sentence text is deleted to obtain the teacher questioning text.

In this embodiment of the present disclosure, by recognizing a basic question sentence in all the dialogue contents; and performing de-noising operation on the basic question sentence to obtain the teacher questioning text, it is possible to achieve a purpose of further refining the question text and avoid the influence of subsequent basic questions on the assessment results of the classroom to be assessed.

S103, receiving an objective analysis instruction of the classroom to be assessed; where the objective analysis instruction include a Q&A-dialogue analysis instruction, a classroom-interaction analysis instruction, and a curriculum standard implementation analysis instruction.

The objective analysis instructions for the classroom to be assessed may be instructions for conducting Q&A dialogue analysis, classroom interaction analysis, and curriculum standard implementation and analysis on the classroom content of the classroom to be assessed. The objective analysis instructions include at least one of Q&A-dialogue analysis instructions, classroom-interaction analysis instructions, and curriculum standard implementation analysis instructions. The Q&A-dialogue analysis instruction is used to analyze whether the Q&A dialogue between teachers and students during the teaching course meets the teaching objectives. The classroom-interaction analysis instruction is used to analyze whether the classroom interaction between teachers and students during the teaching course meets the teaching objectives or promotes the achievement of the teaching objectives. The curriculum standard implementation analysis instruction is used to analyze whether the teaching content and course plan in the classroom to be assessed meet the curriculum standards stipulated by the Ministry of Education.

In an embodiment, objective analysis instructions for the classroom to be assessed may be received through a human-computer interaction interface. For example, objective analysis instructions for the classroom to be assessed, selected or directly inputted by user, are received through a human-computer interaction interface. Or the default objective analysis instructions for the type of course to be assessed may be read based on the course type of the class, without excessive limitation here. Based on the objective analysis instructions, the analysis task for the classroom to be assessed may be determined.

S104, inputting the text to be input and the classroom objective information into a preset model, so that the preset model processes the text to be input and the classroom objective information based on the objective analysis instruction, and outputs an assessment result of the classroom to be assessed; where the preset model is obtained by taking educational scenario corpus as a training sample and taking a main task module for analyzing Q&A dialogue, a main task module for analyzing classroom interaction and a main task module for analyzing curriculum standard implementation as jointly trained main tasks to perform supervised fine-tuning training; the main task module for analyzing Q&A dialogue is configured to respond to the Q&A-dialogue analysis instruction, the main task module for analyzing classroom interaction is configured to respond to the classroom-interaction analysis instruction, and the main task module for analyzing curriculum standard implementation is configured to respond to the curriculum standard implementation analysis instruction.

The preset model may be a large language model capable of assessing the text to be input. The input limit of the preset model is greater than the average length of the text to be input, and corresponding process may be performed on the text to be input for different objective analysis instructions based on the classroom objective information. The assessment result may be the result obtained by the preset model processing the text to be input based on the preset assessment dimensions. The preset assessment dimensions include the assessment dimensions of questioning validity analysis, knowledge objectives, questioning avoidance, and questioning optimization.

The preset model is obtained by taking educational scenario corpus as a training sample and taking a main task module for analyzing Q&A dialogue, a main task module for analyzing classroom interaction and a main task module for analyzing curriculum standard implementation as jointly trained main tasks to perform supervised fine-tuning training. The educational scenario corpus refers to the corpus related to educational resources and teaching content (corpus refers to a collection of text resources with a certain quantity and scale), including classroom texts generated from actual offline collected classroom data, classroom texts generated from online recorded courses, texts containing teaching content and Q&A dialogues, teacher lesson plans, course design plans, curriculum standard texts, teaching objective texts, and so on. Supervised fine-tuning training may be to, by using data with real labels to train, train and adjust a pre-trained language model (LLM) for making it better suit a specific task. When performing supervised fine-tuning, the model weights will be adjusted based on the difference from the real labels. Through this fine-tuning process, the model can capture the patterns and characteristics specific to a certain task in the labeled data, making the model more accurate and better adapted to a specific task.

The main task module for analyzing Q&A dialogue is configured to respond to the Q&A-dialogue analysis instruction and analyze whether the teacher Q&A dialogue in the text to be input meets the teaching objective information. The main task module for analyzing classroom interaction is configured to respond to the classroom-interaction analysis instructions and analyze whether the teacher interactive behavior in the text to be input conforms to the teaching objective information. The main task module for analyzing curriculum standard implementation is configured to respond to the instructions for analyzing the implementation of curriculum standards, and analyze whether the course teaching in the text to be input complies with the curriculum standard information specified by the Ministry of Education.

In an embodiment, the preset model may determine the analysis task for the text to be input based on the objective analysis instruction. The text to be input and classroom objective information is input into a preset model, so that the preset model processes the text to be input based on the classroom objective information based on the analysis task, and outputs the assessment results of the classroom to be assessed based on the preset assessment dimensions.

In a feasible implementation, the main task module for analyzing Q&A dialogue includes an overall assessment subtask module and a local assessment subtask module; during the supervised fine-tuning training process of the preset model for the main task module for analyzing Q&A dialogue, the classroom text containing teaching objectives and teacher questioning in the educational scenario corpus is processed based on the overall assessment subtask module and the local assessment subtask module, respectively, to output assessment results for the classroom texts.

The overall assessment subtask module may be a module that focuses on the overall experience of the entire class, considering the interaction between teachers and students as well as the context, performs overall assessment on the teacher questioning in the text to be input. The input of the overall assessment subtask module may include not only teacher questioning, but also the content of the classroom teaching to be assessed and responses of the student. The input thereof may also include the classroom text of the entire classroom. The local assessment subtask module may be a module used to assess the validity of current teacher questioning in the classroom. The local assessment subtask module is not highly dependent on context and to perform specific assessment on teacher questioning based on different preset assessment dimensions only by using teacher questioning in the classroom as input data.

In an embodiment, the main task module for analyzing Q&A dialogue includes an overall assessment subtask module and a local assessment subtask module. During the supervised fine-tuning training process of the preset model for the main task module for analyzing Q&A dialogue, the classroom text containing teaching objectives and teacher questioning in the educational scenario corpus may be processed respectively based on the overall assessment subtask module and the local assessment subtask module. The overall assessment subtask module may assess whether the teacher questioning meet the teaching objectives based on the context of the teacher questioning in the educational scenario corpus, and the local assessment may assess whether the teacher questioning meet the teaching objectives based on a single question asked by the current teacher to output assessment results for the classroom text.

According to the embodiments of the present disclosure, by setting up the main task module for analyzing Q&A dialogue, which includes the overall assessment subtask module and the local assessment subtask module, and performing supervised training on the overall assessment subtask module and the local assessment subtask module based on the educational scenario corpus, it is possible to achieve the purpose of performing overall and specific assessment on teacher Q&A questioning and answers respectively, and improve the accuracy of the output assessment results of the preset model.

In a feasible implementation, the overall assessment subtask module includes a first overall subtask, a second overall subtask, and a third overall subtask; the first overall subtask is used to perform overall assessment on the overall validity of all teacher questioning in the classroom text during the process of supervised fine-tuning training; the second overall subtask is used to perform overall assessment on the preset knowledge objective in the classroom text during the process of supervised fine-tuning training; the third overall subtask is used to propose an overall optimization suggestion for teacher questioning in the classroom text during the process of supervised fine-tuning training; the local assessment subtask module includes a first local subtask, a second local subtask, and a third local subtask; the first local subtask is used to make a specific judgment on the validity of various teacher questioning in the classroom text during the process of supervised fine-tuning training; the second local subtask is used to perform specific assessment on the correlation between the teacher questioning and the teaching objective in the classroom text during the process of supervised fine-tuning training; the third local subtask is used to optimize and rewrite teacher questioning in the classroom text during the process of supervised fine-tuning training.

The overall assessment subtask module includes a first overall subtask, a second overall subtask, and a third overall subtask. The first overall subtask is used to perform overall assessment on the overall validity of all teacher questioning in the classroom text during the process of supervised fine-tuning training. The overall assessment of the overall validity focuses on whether teacher questioning guides students to think. The second overall subtask is used to perform overall assessment on the preset knowledge objective in the classroom text during the process of supervised fine-tuning training. The overall assessment of the preset knowledge objective focuses on the correlation between teacher questioning and knowledge. The third overall subtask is used to propose an overall optimization suggestion for teacher questioning in the classroom text during the process of supervised fine-tuning training. The overall optimization suggestion may be a combination of validity and knowledge objectives, providing corresponding modification suggestions that may be optimized.

The local assessment subtask module includes a first local subtask, a second local subtask, and a third local subtask. The first local subtask is used to make a specific judgment on the validity of various teacher questioning in the classroom text during the process of supervised fine-tuning training, which is a classification task. The validity may be to judge whether the current teacher questioning is an open-ended question that will stimulate students to think. The second local subtask is used to perform specific assessment on the correlation between the teacher questioning and the teaching objective in the classroom text during the process of supervised fine-tuning training, which is a task of classification and natural language generation. The correlation requires the local assessment subtask module to judge whether the current problem is correlated to the teaching objectives, and if so, it is necessary to explain the reasons. The third local subtask is used to optimize and rewrite teacher questioning in the classroom text during the process of supervised fine-tuning training, which is a text rewriting task. The optimization and rewriting of the teacher questioning may be to rewrite some invalid questions into valid ones, or to rewrite the questions from closed questions to open questions. The above tasks all require outputting a text summary of preset fields (such as 100-150 words), which may be output through the following framework.

The output results of the six subtasks obtained by the overall assessment subtask module and the local assessment subtask module executing their respective three subtasks may be integrated and summarized based on the four assessment dimensions of questioning validity analysis, knowledge objective, questioning avoidance, and questioning optimization, and then output based on the four assessment dimensions. The questioning validity analysis may be used to assess the validity of teacher questioning of the current course, that is, whether to stimulate students to think; knowledge objective may be used to assess the correlation between teacher questioning of the current course and teaching objectives; questioning avoidance may be used to find out teacher questioning that may be avoided in the current course; and, questioning optimization may be used to find out teacher questioning directions that may be optimized for the current course.

The assessment dimension of questioning validity analysis may be combined with two parts: the overall analysis of questioning validity and the specific assessment of validity judgment. In one example, the framework may take the following form:

| |
|---|
| The overall assessment of questioning validity is: |
| {The overall analysis of questioning validity} |
| The specific valid questioning is: |
| {Questions that may stimulate students to think} |

The assessment dimension of knowledge objective may be combined with two parts: the overall analysis of knowledge objective in the overall assessment and the teaching objective correlation of specific assessment. In one example, the framework may take the following form:

| |
|---|
| The overall assessment of questioning knowledge objective is: |
| {The overall analysis of questioning knowledge objective } |
| The questions related to teaching is: |
| {Questions related to teaching} |

For the assessment dimension of questioning avoidance, inappropriate questioning in the classroom may be listed. In the present disclosure, the questioning that need to be avoided are defined as those that are "unrelated to the teaching content" and "cannot stimulate student to think". The judgment logic is to judge the validity of the specific analysis as low validity and poor correlation to questioning teaching as the final result.

For the assessment dimension of questioning optimization, it is necessary to output the optimization of the current question, such as including the questioning rewriting part in the specific assessment and the questioning optimization suggestion part in the overall assessment. The final result is output in a modification-suggestion structure, and in one example, the framework may take the following form:

| |
|---|
| The current question that needs to be rewritten is: |
| { Questioning rewriting} |
| The following suggestion is: |
| {Questioning optimization suggestion} |

Finally, analysis of the four assessment dimensions mentioned above is organized into an analysis report for the final output.

In this embodiment of the present disclosure, by setting the overall assessment subtask module to include three overall subtasks, and setting the local assessment subtask module to include three local subtasks, a total of six subtasks including three overall subtasks and three local subtasks are jointly perform supervised training. During the training process, the first overall subtask and the first local subtask work jointly cooperate to output assessment results under the dimension of questioning validity analysis, the second overall subtask and the second local subtask work jointly cooperate to output assessment results under the dimension of knowledge objective, and the third overall subtask and the third local subtask work jointly cooperate to output assessment results under the dimension of questioning optimization. At the same time, the first local subtask and the second local subtask work jointly cooperate to output assessment results under the dimension of questioning avoidance, that is, all subtasks jointly executed in the overall assessment subtask module and the local assessment subtask module may output assessment results for teacher questioning in the classroom to be assessed based on four assessment dimensions: questioning validity analysis, knowledge objective, questioning avoidance, and questioning optimization, thereby ensuring the objectivity of classroom assessment and further improving the comprehensiveness of teacher classroom questioning analysis.

In embodiments of the present disclosure, classroom data and classroom objective information is acquired for a classroom to be assessed; where the classroom data includes audio data and/or video data; the classroom objective information includes teaching objective information and curriculum standard information; the classroom data is converted into a text to be input; an objective analysis instruction is received for the classroom to be assessed; where the objective analysis instruction include a Q&A-dialogue analysis instruction, a classroom-interaction analysis instruction, and a curriculum standard implementation analysis instruction; and the text to be input and the classroom objective information is input into a preset model, so that the preset model processes the text to be input and the classroom objective information based on the objective analysis instruction, and outputs an assessment result of the classroom to be assessed; where the preset model is obtained by taking educational scenario corpus as a training sample and taking a main task module for analyzing Q&A dialogue, a main task module for analyzing classroom interaction and a main task module for analyzing curriculum standard implementation as jointly trained main tasks to perform supervised fine-tuning training; the main task module for analyzing Q&A dialogue is configured to respond to the Q&A-dialogue analysis instruction, the main task module for analyzing classroom interaction is configured to respond to the classroom-interaction analysis instruction, and the main task module for analyzing curriculum standard implementation is configured to respond to the curriculum standard implementation analysis instruction. Through the above classroom assessment methods, the problem of low assessment efficiency and strong subjectivity in assessment conclusions when using relevant technologies for classroom interactive behavior assessment can be solved. By converting the classroom data of the classroom to be assessed into the text to be input, receiving an objective analysis instruction of the classroom to be assessed, and inputting the text to be input and the classroom objective information into a preset model, so that the preset model processes the text to be input and the classroom objective information based on the objective analysis instruction, and outputs an assessment result of the classroom to be assessed, it is possible to achieve a purpose of executing a Q&A-dialogue analysis task, a classroom-interaction analysis task, and a curriculum standard implementation and analysis task in the classroom without the need for manual listening, thereby improving the efficiency of classroom assessment, and this scheme is based on both the text to be input converted from the classroom data and the classroom objective information, for the classroom assessment, thereby ensuring the objectivity and accuracy of the assessment results.

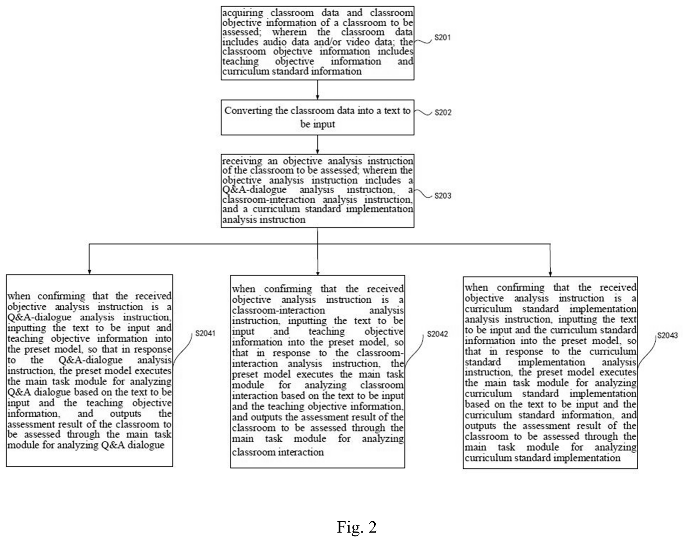

Fig. 2 is a flowchart of a classroom assessment method according to an embodiment of the present disclosure. As shown in Fig. 2, the classroom assessment method specifically includes the following steps.
S201, acquiring classroom data and classroom objective information of a classroom to be assessed; where the classroom data includes audio data and/or video data; the classroom objective information includes teaching objective information and curriculum standard information;
S202, converting the classroom data into a text to be input;
S203, receiving an objective analysis instruction of the classroom to be assessed; where the objective analysis instruction include a Q&A-dialogue analysis instruction, a classroom-interaction analysis instruction, and a curriculum standard implementation analysis instruction; and
S2041, when confirming that the received objective analysis instruction is a Q&A-dialogue analysis instruction, inputting the text to be input and teaching objective information into the preset model, so that in response to the Q&A-dialogue analysis instruction, the preset model executes the main task module for analyzing Q&A dialogue based on the text to be input and the teaching objective information, and outputs the assessment result of the classroom to be assessed through the main task module for analyzing Q&A dialogue.

In an embodiment, when confirming that the received objective analysis instruction is a Q&A-dialogue analysis instruction, the text to be input and teaching objective information may be inputted into a preset model, so that in response to the Q&A-dialogue analysis instruction, the preset model executes the main task module for analyzing Q&A dialogue. The main task module for analyzing Q&A dialogue may process the text to be input based on the teaching objective information, analyze whether the Q&A dialogue of the teacher in the text to be input meets the teaching objective information, and then outputs the assessment result of the classroom to be assessed through the main task module for analyzing Q&A dialogue.

In a feasible embodiment, the when confirming that the received objective analysis instruction is a Q&A-dialogue analysis instruction, inputting the text to be input and teaching objective information into the preset model, so that in response to the Q&A-dialogue analysis instruction, the preset model executes the main task module for analyzing Q&A dialogue based on the text to be input and the teaching objective information, and outputs the assessment result of the classroom to be assessed through the main task module for analyzing Q&A dialogue includes:
when confirming that the received objective analysis instruction is a Q&A-dialogue analysis instruction, the preset model responds to the Q&A-dialogue analysis instruction, so that the preset model is in a state of waiting to execute the objective assessment task under various types of assessment dimensions in the main task module for analyzing Q&A dialogue;
determining the objective assessment task; and
inputting the text to be input and the teaching objective information into the preset model, so that the main task module for analyzing Q&A dialogue executes the objective assessment task based on the text to be input and the teaching objective information, and outputs the assessment result of the classroom to be assessed.

Among them, the assessment dimensions may be our assessment dimensions of questioning validity analysis, knowledge objective, questioning avoidance, and questioning optimization. The objective assessment task may be a task corresponding to at least one assessment dimension among the four assessment dimensions.

In an embodiment, when confirming that the received objective analysis instruction is a Q&A-dialogue analysis instruction, it may be confirmed whether the preset model responds to the question answer dialogue analysis instruction based on whether a response signal feedback from the preset model is received. When confirming that the preset model responds to the Q&A-dialogue analysis instruction, the preset model is in a state of waiting to execute the objective assessment tasks under various assessment dimensions in the main task module for analyzing Q&A dialogue. User input or selected assessment instructions may be received through a human-computer interaction interface, and objective assessment tasks may be determined based on the assessment instructions. The text to be input and teaching objective information is input into a preset model, so that the main task module for analyzing Q&A dialogue executes the objective assessment task based on the text to be input and teaching objective information, and the assessment results of the classroom to be assessed are output.

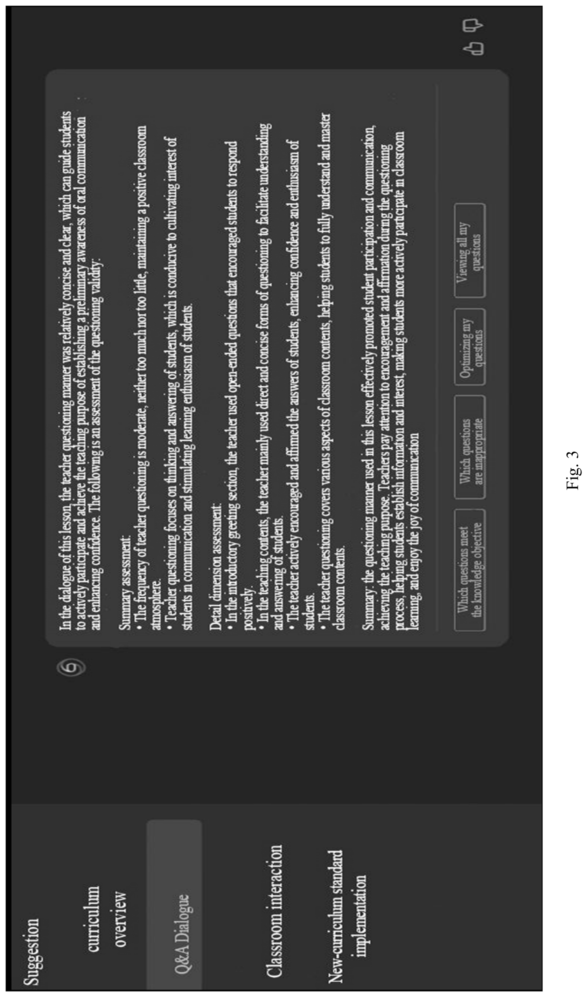

Fig. 3 is a user interface according to an embodiment of the present disclosure. As shown in Fig. 3, a left side of the interface includes three major tasks: Q&A dialogue, classroom interaction, and implementation of the new curriculum standards. When the user selects "Q&A Dialogue" on the left side of the interface, the assessment results with the default assessment dimension of "Questioning validity analysis" may be displayed on the right side of the interface. The options below the assessment results displayed on the right include: which questions meet the knowledge objective, which questions are inappropriate, optimizing my questions, and viewing all my questions. Users may select corresponding options based on their viewing needs. When receiving the user selects the option of "optimizing my questions", it may be determined that the objective assessment task of the preset model is questioning optimization. Then, the text to be input and teaching objective information are input into the preset model, so that the Q&A dialogue analysis module executes the questioning optimization task based on the text to be input and teaching objective information, and outputs optimization suggestions for the assessed classroom viewed by the user.

In this scheme, after confirming that the Q&A-dialogue analysis instruction is received and the preset model responds to the instruction, the preset model is in a state of waiting to execute the main task module for analyzing Q&A dialogue. At this time, the objective assessment tasks under each type of assessment dimension in the main task module for analyzing Q&A dialogue are determined, so that the preset model executes the objective assessment task based on the text to be input and the teaching objective information, which can achieve the effect of analyzing teacher classroom questioning based on different assessment dimensions.

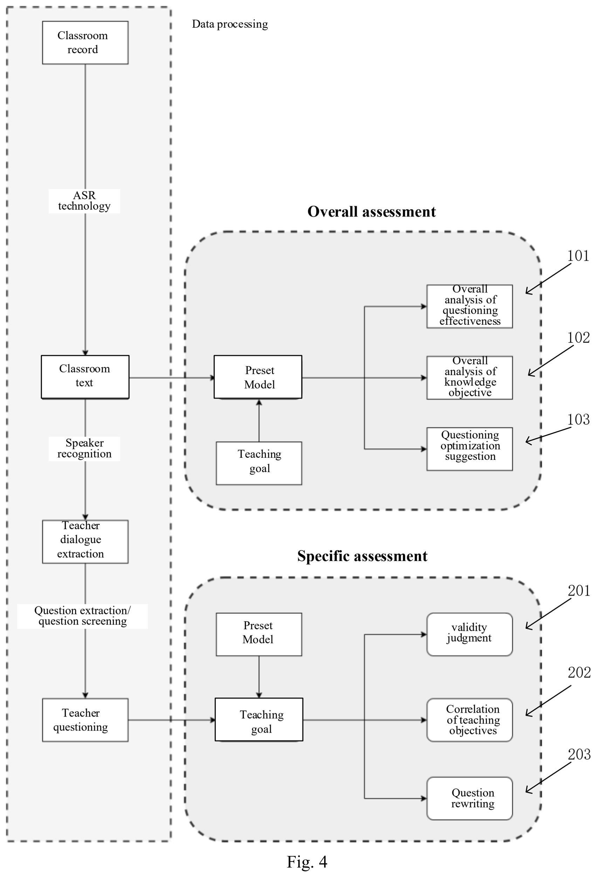

Fig. 4 is a flowchart of classroom questioning assessment according to an embodiment of the present disclosure. As shown in Fig. 4, the data processing module performs ASR conversion on the recorded classroom data to obtain classroom text. Classroom text and teaching objectives may be input into a preset model, and the preset model performs overall assessment, taking into account the context, on teacher questioning in the classroom text based on three dimensions: overall assessment of question validity, overall assessment of knowledge objective, and suggestion for questioning optimization. Before or after inputting the classroom text and teaching objectives into the preset model, speaker recognition is performed on the classroom text and teaching objectives, teacher dialogues are extracted, and question extraction and/or question screening is performed on the teacher questioning to obtain valid questions of teacher questioning. Valid questions and teaching objectives are input into the preset model, and the specific assessment of single question is performed on teacher questioning in the classroom text based on three dimensions: validity judgment, questioning teaching correlation, and questioning rewriting.

As shown in Fig. 4, the main task module for analyzing Q&A dialogue includes an overall assessment subtask module and a local assessment subtask module;
the determining the objective assessment task includes:
acquiring a first type of assessment prompt instruction; where the first type of assessment prompt instruction is used to prompt the preset model to output the assessment result of the classroom to be assessed based on an assessment dimension of questioning validity analysis; the assessment dimension of questioning validity analysis includes performing assessment on validity of the teacher questioning in the classroom to be assessed;
determining that a first overall subtask in the overall assessment subtask module and a first local subtask in the local assessment subtask module jointly constitute the objective assessment task based on the first type of assessment prompt instruction; where the first overall subtask is used to perform overall assessment on an entirety validity of all teacher questioning in the classroom to be assessed, and the first local subtask is used to make a specific judgment on the validity of each teacher question in the classroom to be assessed;
   and/or,
acquiring a second type of assessment prompt instruction; where the second type of assessment prompt instruction is used to prompt the preset model to output the assessment result of the classroom to be assessed based on an assessment dimension of knowledge objective; the assessment dimension of the knowledge objective includes performing assessment on correlation between teacher questioning and teaching objective in the classroom to be assessed;
determining that the second overall subtask in the overall assessment subtask module and the second local subtask in the local assessment subtask module jointly constitute the objective assessment task based on the second type of assessment prompt instruction; where the second overall subtask is used to perform overall assessment on a preset knowledge objective in the classroom to be assessed, and the second local subtask is used to perform specific assessment on the correlation between teacher question and teaching objective in the classroom to be assessed;
   and/or,
acquiring a third type of assessment prompt instruction as the objective assessment task; where the third type of assessment prompt instruction is used to prompt the preset model to output the assessment result of the classroom to be assessed based on an assessment dimension of questioning avoidance; where the assessment dimension of questioning avoidance include finding out teacher questioning that may be avoided in the classroom to be assessed;
determining that a first local subtask in the local assessment subtask module and a second local subtask in the local assessment subtask module jointly constitute the objective assessment task based on the third type of assessment prompt instruction; where the first local subtask is used to make a specific judgment on the validity of each teacher questioning in the classroom to be assessed, and the second local subtask is used to make specific assessment on the correlation between teacher questioning and teaching objective in the classroom to be assessed;
   and/or,
acquiring a fourth type of assessment prompt instruction as the objective assessment task; where the fourth type of assessment prompt instruction is used to prompt the preset model to output the assessment result of the classroom to be assessed based on the assessment dimension of questioning optimization; the assessment dimension of questioning optimization include finding out teacher questioning that may be optimized in the classroom to be assessed;
determining that a third overall subtask in the overall assessment subtask module and a third local subtask in the local assessment subtask module jointly constitute an objective assessment task based on the fourth type of assessment prompt instruction; where the third overall subtask is used to propose an overall optimization suggestion for teacher questioning in the classroom to be assessed, and the third local subtask is used to optimize and rewrite teacher questioning in the classroom to be assessed.

In the first embodiment, a first type of assessment prompt instruction may be acquired through the user interface. The first type of assessment prompt instruction is used to prompt the preset model to output the assessment result of the classroom to be assessed based on an assessment dimension of questioning validity analysis. The assessment dimension of questioning validity analysis includes performing assessment on validity of the teacher questioning in the classroom to be assessed. Based on the first type of assessment prompt instruction, it is determined that the first overall subtask in the overall assessment subtask module and the first local subtask in the local assessment subtask module jointly constitute the objective assessment task. As indicated by the arrows "101" and "201" in Fig. 4, the "overall analysis of questioning validity" in the figure represents the first overall subtask. The first overall subtask is used to perform overall assessment on an entirety validity of all teacher questioning in the classroom to be assessed, and the first local subtask is used to make a specific judgment on the validity of each teacher questioning in the classroom to be assessed. "Validity judgment" in the figure represents the first local subtask. The first local subtask is used to judge whether each teacher questioning may stimulate students to think. Under the above objective assessment task, the overall assessment results and local assessment results of the classroom to be assessed may be combined as the first type of assessment results. The first type of assessment result is the assessment result of the classroom to be assessed output by the preset model based on the assessment dimension of questioning validity analysis, and may be output based on the output framework of the dimension of questioning validity analysis mentioned above, which will not be repeated here.

In the second embodiment, the second type of assessment prompt instruction may be acquired through the user interface. The second type of assessment prompt instruction is used to prompt the preset model to output the assessment result of the classroom to be assessed based on an assessment dimension of knowledge objective. The assessment dimension of the knowledge objective includes performing assessment on correlation between teacher questioning and teaching objective in the classroom to be assessed. Based on the second type of assessment prompt instruction, it is determined that the second overall subtask in the overall assessment subtask module and the second local subtask in the local assessment subtask module jointly constitute the objective assessment task. As indicated by the arrows "102" and "202" in Fig. 4, the "overall analysis of knowledge objective" in the figure represents the second overall subtask. The second overall subtask is used to perform an overall assessment on the predetermined knowledge objective in the classroom to be assessed. The "correlation of teaching objectives" in the figure represents the second local subtask. The second local subtask is used to perform specific assessment on the correlation between the teacher questioning and the teaching objective in the classroom to be assessed. Under the above objective assessment task, the overall assessment results and local assessment results of the assessed classroom may be combined as the second type of assessment result. The second type of assessment result is the assessment result of the classroom to be assessed output by the preset model based on the assessment dimension of knowledge objective, and may be output based on the output framework of the dimension of knowledge objective analysis mentioned above, which will not be repeated here.

In the third embodiment, the third type of assessment prompt instruction may be acquired through the user interface as the objective assessment task. The third type of assessment prompt instruction is used to prompt the preset model to output the assessment result of the classroom to be assessed based on an assessment dimension of questioning avoidance. The assessment dimension of questioning avoidance include finding out teacher questioning that may be avoided in the classroom to be assessed. In this embodiment, the avoidable questioning is defined as those "without correlation to the teaching content" and "cannot stimulate student to think". In an embodiment, the judgment logic is to using the questioning, the analysis result of local subtasks, of which the validity is judged to be low and the correlation to the questioning teaching is poor as the final questioning avoidance result. Based on the third type of assessment prompt instruction, it is determined that the first local subtask in the local assessment subtask module and the second local subtask in the local assessment subtask module jointly constitute the objective assessment task. The first local subtask is used to make a specific judgment on the validity of each teacher question in the classroom to be assessed, and the second local subtask is used to perform specific assessment on the correlation between teacher question and teaching objective in the classroom to be assessed.

In the fourth embodiment, the fourth type of assessment prompt instruction may be acquired through the user interface as the objective assessment task. The fourth type of assessment prompt instruction is used to prompt the preset model to output the assessment result of the classroom to be assessed based on the assessment dimension of questioning optimization. The assessment dimension of questioning optimization include finding out teacher questioning that may be optimized in the classroom to be assessed and to output the optimization results of the current teacher questioning. Based on the fourth type of assessment prompt instruction, it is determined that the third overall subtask in the overall assessment subtask module and the third local subtask in the local assessment subtask module jointly constitute the objective assessment task. As indicated by the arrows "103" and "203" in Fig. 4, "Questioning optimization suggestion" represents the third overall subtask. The third overall subtask is used to propose an overall optimization suggestion for teacher questioning in the classroom to be assessed. "Question rewriting" in the figure represents the third local subtask. The third local subtask is used to optimize and rewrite teacher questioning in the classroom to be assessed. Under the above objective assessment task, the overall assessment result and local assessment result of the assessed classroom may be combined as the third type of assessment result. The third type of assessment result is the optimization result of the classroom to be assessed output by the preset model based on the assessment dimension of questioning optimization, and may be output based on the output framework of the dimension of questioning optimization mentioned above, which will not be repeated here.

It can be understood that the present disclosure may assess the classroom to be assessed based on at least one dimension through the above embodiments, or assess the classroom to be assessed based on the above four dimensions simultaneously. The present disclosure has fifteen options for assessing classrooms to be assessed based on different dimensions.

In this embodiment of the present disclosure, by simultaneously or selectively assessing contents of classroom Q&A dialogues in the assessment classroom based on different assessment dimensions and assessment scopes, it is possible to assess the teacher questioning in the classroom to be assessed from different dimensions under the premise of using a unified model, which avoids a problem of using classroom data to train separately for different assessment dimensions and isolating the training results of different assessment dimensions in related technologies. It is possible to effectively reduce a large amount of repetitive model training work, strengthen the correlation between training tasks of different assessment dimensions, and further improve the objectivity of classroom assessment.

S2042, when confirming that the received objective analysis instruction is a classroom-interaction analysis instruction, inputting the text to be input and teaching objective information into the preset model, so that in response to the classroom-interaction analysis instruction, the preset model executes the main task module for analyzing classroom interaction based on the text to be input and the teaching objective information, and outputs the assessment result of the classroom to be assessed through the main task module for analyzing classroom interaction.

In an embodiment, when confirming that the received objective analysis instruction is a classroom-interaction analysis instruction, the text to be input and teaching objective information may be input into the preset model, so that the preset model responds to the classroom-interaction analysis instruction. The preset model may execute the main task module for analyzing classroom interaction based on the text to be input and the teaching objective information. The main task module for analyzing classroom interaction is configured to respond to the classroom-interaction analysis instruction, analyze whether the teacher interaction behavior in the text to be input meets the teaching objective information, and then output the assessment result of the classroom to be assessed through the main task module for analyzing classroom interaction.

S2043, when confirming that the received objective analysis instruction is a curriculum standard implementation analysis instruction, inputting the text to be input and the curriculum standard information into the preset model, so that in response to the curriculum standard implementation analysis instruction, the preset model executes the main task module for analyzing curriculum standard implementation based on the text to be input and the curriculum standard information, and outputs the assessment result of the classroom to be assessed through the main task module for analyzing curriculum standard implementation.

In an embodiment, when confirming that the received objective analysis instruction is a curriculum standard implementation analysis instruction, the text to be input and curriculum standard information are inputted into the preset model, so that the preset model responds to the curriculum standard implementation analysis instruction. The main task module for analyzing curriculum standard implementation is configured to respond to the curriculum standard implementation analysis instruction, analyze whether the course teaching in the text to be input meet the curriculum standard information specified by the Ministry of Education, and output the assessment results of the classroom to be assessed through the main task module for analyzing curriculum standard implementation.

According to the technical solution of embodiments of the present disclosure, based on different types of received objective analysis instructions, the text to be input and the classroom objective information are inputted into the preset model, so that in response to different objective analysis instructions, the preset model outputs the assessment results of the classroom to be assessed through the main task module for analyzing Q&A dialogue, the main task module for analyzing classroom interaction and the main task module for analyzing curriculum standard implementation. Such a purpose can be achieved that the classroom to be assessed is respectively assessed correspondingly based on the assessment tasks in different types of main task modules, thereby improving pertinence of assessing classroom interactive behavior, and enhancing the user experience of viewing assessment results.

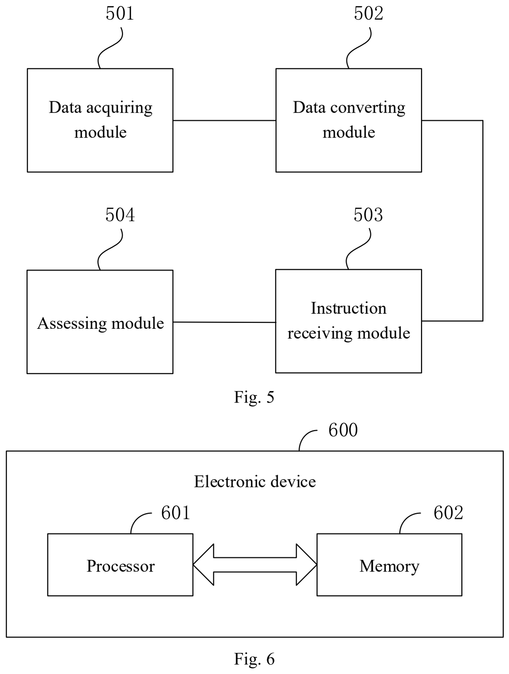

Fig. 5 is a diagram of a structure of a classroom assessment apparatus according to an embodiment of the present disclosure. As shown in Fig. 5, the classroom assessment apparatus specifically includes the following modules.
a data acquiring module 501, configured to acquire classroom data and classroom objective information of a classroom to be assessed; where the classroom data includes audio data and/or video data; the classroom objective information includes teaching objective information and curriculum standard information;
a data converting module 502, configured to convert the classroom data into a text to be input;
an instruction receiving module 503, configured to receive an objective analysis instruction of the classroom to be assessed; where the objective analysis instruction include a Q&A-dialogue analysis instruction, a classroom-interaction analysis instruction, and a curriculum standard implementation analysis instruction; and
an assessing module 504, configured to input the text to be input and the classroom objective information into a preset model, so that the preset model processes the text to be input and the classroom objective information based on the objective analysis instruction, and outputs an assessment result of the classroom to be assessed; where the preset model is obtained by taking educational scenario corpus as a training sample and taking a main task module for analyzing Q&A dialogue, a main task module for analyzing classroom interaction and a main task module for analyzing curriculum standard implementation as jointly trained main tasks to perform supervised fine-tuning training; the main task module for analyzing Q&A dialogue is configured to respond to the Q&A-dialogue analysis instruction, the main task module for analyzing classroom interaction is configured to respond to the classroom-interaction analysis instruction, and the main task module for analyzing curriculum standard implementation is configured to respond to the curriculum standard implementation analysis instruction.

In an embodiment, the assessing module 504 includes:
a Q&A-dialogue analyzing unit, configured to, when confirming that the received objective analysis instruction is a Q&A-dialogue analysis instruction, input the text to be input and teaching objective information into the preset model, so that in response to the Q&A-dialogue analysis instruction, the preset model executes the main task module for analyzing Q&A dialogue based on the text to be input and the teaching objective information, and outputs the assessment result of the classroom to be assessed through the main task module for analyzing Q&A dialogue;
a classroom-interaction analyzing unit, configured to, when confirming that the received objective analysis instruction is a classroom-interaction analysis instruction, input the text to be input and teaching objective information into the preset model, so that in response to the classroom-interaction analysis instruction, the preset model executes the main task module for analyzing classroom interaction based on the text to be input and the teaching objective information, and outputs the assessment result of the classroom to be assessed through the main task module for analyzing classroom interaction; and
a curriculum standard implementing and analyzing unit, configured to, when confirming that the received objective analysis instruction is a curriculum standard implementation analysis instruction, input the text to be input and the curriculum standard information into the preset model, so that in response to the curriculum standard implementation analysis instruction, the preset model executes the main task module for analyzing curriculum standard implementation based on the text to be input and the curriculum standard information, and outputs the assessment result of the classroom to be assessed through the main task module for analyzing curriculum standard implementation.

In an embodiment, the Q&A-dialogue analyzing unit is specifically configured to:
when confirming that the received objective analysis instruction is a Q&A-dialogue analysis instruction, confirm that the preset model responds to the Q&A-dialogue analysis instruction, so that the preset model is in a state of waiting to execute the objective assessment task under various types of assessment dimensions in the main task module for analyzing Q&A dialogue;
determine the objective assessment task; and
input the text to be input and the teaching objective information into the preset model, so that the main task module for analyzing Q&A dialogue executes the objective assessment task based on the text to be input and the teaching objective information, and outputs the assessment result of the classroom to be assessed.

In an embodiment, the main task module for analyzing Q&A dialogue includes an overall assessment subtask module and a local assessment subtask module;
The Q&A-dialogue analyzing unit is specifically configured to:
acquire a first type of assessment prompt instruction; where the first type of assessment prompt instruction is used to prompt the preset model to output the assessment result of the classroom to be assessed based on an assessment dimension of questioning validity analysis; the assessment dimension of questioning validity analysis includes performing assessment on validity of the teacher questioning in the classroom to be assessed;
determine that a first overall subtask in the overall assessment subtask module and a first local subtask in the local assessment subtask module jointly constitute the objective assessment task based on the first type of assessment prompt instruction; where the first overall subtask is used to perform overall assessment on an entirety validity of all teacher questioning in the classroom to be assessed, and the first local subtask is used to make a specific judgment on the validity of each teacher question in the classroom to be assessed;
   and/or,
acquire a second type of assessment prompt instruction; where the second type of assessment prompt instruction is used to prompt the preset model to output the assessment result of the classroom to be assessed based on an assessment dimension of knowledge objective; the assessment dimension of the knowledge objective includes performing assessment on correlation between teacher questioning and teaching objective in the classroom to be assessed;
determine that the second overall subtask in the overall assessment subtask module and the second local subtask in the local assessment subtask module jointly constitute the objective assessment task based on the second type of assessment prompt instruction; where the second overall subtask is used to perform overall assessment on a preset knowledge objective in the classroom to be assessed, and the second local subtask is used to perform specific assessment on the correlation between teacher question and teaching objective in the classroom to be assessed;
   and/or,
acquire a third type of assessment prompt instruction as the objective assessment task; where the third type of assessment prompt instruction is used to prompt the preset model to output the assessment result of the classroom to be assessed based on an assessment dimension of questioning avoidance; where the assessment dimension of questioning avoidance include finding out teacher questioning that may be avoided in the classroom to be assessed;
determine that a first local subtask in the local assessment subtask module and a second local subtask in the local assessment subtask module jointly constitute the objective assessment task based on the third type of assessment prompt instruction; where the first local subtask is used to make a specific judgment on the validity of each teacher questioning in the classroom to be assessed, and the second local subtask is used to make specific assessment on the correlation between teacher questioning and teaching objective in the classroom to be assessed;
   and/or,
acquire a fourth type of assessment prompt instruction as the objective assessment task; where the fourth type of assessment prompt instruction is used to prompt the preset model to output the assessment result of the classroom to be assessed based on the assessment dimension of questioning optimization; the assessment dimension of questioning optimization include finding out teacher questioning that may be optimized in the classroom to be assessed;
determine that a third overall subtask in the overall assessment subtask module and a third local subtask in the local assessment subtask module jointly constitute an objective assessment task based on the fourth type of assessment prompt instruction; where the third overall subtask is used to propose an overall optimization suggestion for teacher questioning in the classroom to be assessed, and the third local subtask is used to optimize and rewrite teacher questioning in the classroom to be assessed.

In an embodiment, the main task module for analyzing Q&A dialogue includes an overall assessment subtask module and a local assessment subtask module; during a process of performing supervised fine-tuning training on the main task module for analyzing Q&A dialogue, the preset model respectively processes the classroom text containing the teaching objective and the teacher questioning in the educational scenario corpus based on the overall assessment subtask module and the local assessment subtask module to output assessment result for the classroom text.

In an embodiment, the overall assessment subtask module includes a first overall subtask, a second overall subtask, and a third overall subtask; the first overall subtask is used to perform overall assessment on the overall validity of all teacher questioning in the classroom text during the process of supervised fine-tuning training; the second overall subtask is used to perform overall assessment on the preset knowledge objective in the classroom text during the process of supervised fine-tuning training; the third overall subtask is used to propose an overall optimization suggestion for teacher questioning in the classroom text during the process of supervised fine-tuning training; the local assessment subtask module includes a first local subtask, a second local subtask, and a third local subtask; the first local subtask is used to make a specific judgment on the validity of various teacher questioning in the classroom text during the process of supervised fine-tuning training; the second local subtask is used to perform specific assessment on the correlation between the teacher questioning and the teaching objective in the classroom text during the process of supervised fine-tuning training; the third local subtask is used to optimize and rewrite teacher questioning in the classroom text during the process of supervised fine-tuning training.

In an embodiment, the data acquiring module 501 is specifically configured to:
acquire the classroom data of the classroom to be assessed; and
query the classroom objective information that matches the classroom data from a preset database, or input the classroom data into a preset chapter matching model, so that the chapter matching model outputs classroom objective information that matches the classroom data.

In an embodiment, the data converting module 502 is specifically configured to:
convert the classroom data into the classroom text;
extract teacher questioning text from the classroom text; and
take the classroom text and the teacher questioning text as the text to be input.

In an embodiment, the data converting module 502 is specifically configured to:
recognize a dialogue role having the most dialogues in the classroom text;
determine the dialogue role having the most dialogues as a teacher role;
extract all the dialogue contents of the teacher role; and
screen the teacher questioning text from all the dialogue contents.

In an embodiment, the data converting module 502 is specifically configured to:
recognize a basic question sentence in all the dialogue contents; and
perform de-noising operation on the basic question sentence to obtain the teacher questioning text.

According to the technical solution of embodiments of the present disclosure, the data acquiring module, configured to acquire classroom data and classroom objective information of a classroom to be assessed; where the classroom data includes audio data and/or video data; the classroom objective information includes teaching objective information and curriculum standard information; the data converting module, configured to convert the classroom data into a text to be input; the instruction receiving module, configured to receive an objective analysis instruction of the classroom to be assessed; where the objective analysis instruction include a Q&A-dialogue analysis instruction, a classroom-interaction analysis instruction, and a curriculum standard implementation analysis instruction; and the assessing module, configured to input the text to be input and the classroom objective information into a preset model, so that the preset model processes the text to be input and the classroom objective information based on the objective analysis instruction, and outputs an assessment result of the classroom to be assessed; where the preset model is obtained by taking educational scenario corpus as a training sample and taking a main task module for analyzing Q&A dialogue, a main task module for analyzing classroom interaction and a main task module for analyzing curriculum standard implementation as jointly trained main tasks to perform supervised fine-tuning training; the main task module for analyzing Q&A dialogue is configured to respond to the Q&A-dialogue analysis instruction, the main task module for analyzing classroom interaction is configured to respond to the classroom-interaction analysis instruction, and the main task module for analyzing curriculum standard implementation is configured to respond to the curriculum standard implementation analysis instruction. Through the above-mentioned classroom assessment apparatus, the problem of low assessment efficiency and strong subjectivity in assessment conclusions when using relevant technologies for classroom interactive behavior assessment can be solved. By converting the classroom data of the classroom to be assessed into the text to be input, receiving an objective analysis instruction of the classroom to be assessed, and inputting the text to be input and the classroom objective information into a preset model, so that the preset model processes the text to be input and the classroom objective information based on the objective analysis instruction, and outputs an assessment result of the classroom to be assessed, it is possible to achieve a purpose of executing a Q&A-dialogue analysis task, a classroom-interaction analysis task, and a curriculum standard implementation and analysis task in the classroom without the need for manual listening, thereby improving the efficiency of classroom assessment, and this scheme is based on both the text to be input converted from the classroom data and the classroom objective information, for the classroom assessment, thereby ensuring the objectivity and accuracy of the assessment results.

The classroom assessment apparatus according to the embodiments of the present disclosure may be an apparatus, or a component, integrated circuit, or chip in a terminal. The apparatus may be a mobile electronic device or a non-mobile electronic device. For example, the mobile electronic device may be mobile phone, tablet, laptop, handheld computer, in-car electronic device, wearable device, ultra mobile personal computer (UMPC), netbook, or personal digital assistant (PDA), etc., the non-mobile electronic device may be server, Network Attached Storage (NAS), personal computers (PC), televisions (TV), ATM, or self-service machine, etc. The embodiments of the present disclosure are not specifically limited.

The classroom assessment device in the embodiments of the present disclosure may be an apparatus with an operating system. The operating system may be Android operating system, iOS operating system, or any other possible operating system, and the embodiments of the present disclosure are not specifically limited.

The classroom assessment device according to the embodiments of the present disclosure can achieve the various processes implemented in the above method embodiments. To avoid repetition, it will not be repeated here.

Fig. 6 is a diagram of a structure of an electronic device according to an embodiment of the present disclosure. As shown in Fig. 6, the embodiments of the present disclosure further provides an electronic device 600, including a processor 601, a memory 602, and a program or instruction stored on the memory 602 and executable on the processor 601. When the program or instruction is executed by the processor 601, the various processes of embodiments of the classroom assessment method described above are implements, which can achieve the same technical effect. It will not be repeated here to avoid repetition.

It should be noted that the electronic devices in the embodiments of the present disclosure include the mobile electronic devices and non-mobile electronic devices described above.

The embodiments of the present disclosure also provides a readable storage medium, on which a program or instruction is stored. When the program or instruction is executed by a processor, the various processes of embodiments of the classroom assessment method described above are implemented, which can achieve the same technical effect. It will not be repeated here to avoid repetition.

The processor is a processor in the electronic device described in the above embodiments. The readable storage medium includes computer-readable storage media such as Read Only Memory (ROM), Random Access Memory (RAM), magnetic disks or optical disks, etc.

Another embodiment of the present disclosure provides a chip, including a processor and a communication interface. The communication interface is coupled to the processor, and the processor is used to run programs or instructions to implement the various processes of embodiments of the classroom assessment method described above, which can achieve the same technical effect. It will not be repeated here to avoid repetition.

It should be understood that the chips mentioned in the embodiments of the present disclosure may also be referred to as system-level chips, system chips, chip systems, or on-chip system chips.

It should also be noted that the terms "include", "comprise" or any other variants thereof are intended to cover non-exclusive inclusion, so that a process, method, commodity or equipment including a series of elements not only includes those elements, but also includes other elements that are not explicitly listed, or also include elements inherent to such processes, methods, commodities, or equipment. If there are no more restrictions, the element defined by the sentence "including a..." does not exclude the existence of other identical elements in the process, method, commodity, or equipment that includes the element. In addition, it should be pointed out that the scope of the methods and devices in the embodiments of the present disclosure is not limited to performing functions in the order shown or discussed, and may also include performing functions in a substantially simultaneous manner or in the opposite order based on the functions involved. For example, the described methods may be performed in a different order than described, and various steps may be added, omitted, or combined. Additionally, the features described with reference to certain examples may be combined in other examples.

Through the description of the above implementation manners, those skilled in the art can clearly understand that the above implementation methods may be implemented through software and necessary general hardware platforms. Of course, they may also be implemented through hardware, but in many cases, the former is the better implementation method. Based on this understanding, the technical solution of the present disclosure may essentially or contribute to the relevant technology in the form of a computer software product, which is stored in a storage medium (such as ROM/RAM, magnetic disk, optical disk) and includes several instructions to enable a terminal (which may be a mobile phone, computer, server, or network device, etc.) to perform the methods described in various embodiments of the present disclosure.

The embodiments of the present disclosure have been described above in conjunction with the accompanying drawings, but the present disclosure is not limited to the specific embodiments described above. The specific embodiments described above are only illustrative and not restrictive. Those skilled in the art can also make many forms within the scope of protection of the present disclosure without departing from the purpose and claims of the present disclosure.

It should be noted that the above are only preferred embodiments and technical principles used in the present disclosure. Those skilled in the art will appreciate that the present disclosure is not limited to the specific embodiments herein, and that various obvious changes, rearrangements, and substitutions may be made by those skilled in the art without departing from the scope of protection of the present disclosure. Therefore, although the present disclosure has been described in detail through the above embodiments, the present disclosure is not limited to the above embodiments, and may include more other equivalent embodiments without departing from the concept of the present disclosure. The scope of the present disclosure is determined by the scope of the attached claims.

## Claims

1. A classroom assessment method, comprising:
Acquiring classroom data and classroom objective information of a classroom to be assessed; wherein the classroom data includes audio data and/or video data; the classroom objective information includes teaching objective information and curriculum standard information;
Converting the classroom data into a text to be input;
Receiving an objective analysis instruction of the classroom to be assessed; wherein the objective analysis instruction includes a Q&A-dialogue analysis instruction, a classroom-interaction analysis instruction, and a curriculum standard implementation analysis instruction; and
Inputting the text to be input and the classroom objective information into a preset model, so that the preset model processes the text to be input and the classroom objective information based on the objective analysis instruction, and outputs an assessment result of the classroom to be assessed; wherein the preset model is obtained by taking educational scenario corpus as a training sample and taking a main task module for analyzing Q&A dialogue, a main task module for analyzing classroom interaction and a main task module for analyzing curriculum standard implementation as jointly trained main tasks to perform supervised fine-tuning training; the main task module for analyzing Q&A dialogue is configured to respond to the Q&A-dialogue analysis instruction, the main task module for analyzing classroom interaction is configured to respond to the classroom-interaction analysis instruction, and the main task module for analyzing curriculum standard implementation is configured to respond to the curriculum standard implementation analysis instruction.

2. The method of claim 1, wherein the inputting the text to be input and the classroom objective information into the preset model, so that the preset model processes the text to be input and the classroom objective information based on the objective analysis instruction, and outputs the assessment result of the classroom to be assessed, comprises:
when confirming that the received objective analysis instruction is a Q&A-dialogue analysis instruction, inputting the text to be input and teaching objective information into the preset model, so that in response to the Q&A-dialogue analysis instruction, the preset model executes the main task module for analyzing Q&A dialogue based on the text to be input and the teaching objective information, and outputs the assessment result of the classroom to be assessed through the main task module for analyzing Q&A dialogue;
when confirming that the received objective analysis instruction is a classroom-interaction analysis instruction, inputting the text to be input and teaching objective information into the preset model, so that in response to the classroom-interaction analysis instruction, the preset model executes the main task module for analyzing classroom interaction based on the text to be input and the teaching objective information, and outputs the assessment result of the classroom to be assessed through the main task module for analyzing classroom interaction; and
when confirming that the received objective analysis instruction is a curriculum standard implementation analysis instruction, inputting the text to be input and the curriculum standard information into the preset model, so that in response to the curriculum standard implementation analysis instruction, the preset model executes the main task module for analyzing curriculum standard implementation based on the text to be input and the curriculum standard information, and outputs the assessment result of the classroom to be assessed through the main task module for analyzing curriculum standard implementation.

3. The method of claim 2, wherein when confirming that the received objective analysis instruction is a Q&A-dialogue analysis instruction, inputting the text to be input and teaching objective information into the preset model, so that in response to the Q&A-dialogue analysis instruction, the preset model executes the main task module for analyzing Q&A dialogue based on the text to be input and the teaching objective information, and outputs the assessment result of the classroom to be assessed through the main task module for analyzing Q&A dialogue, comprises:
when confirming that the received objective analysis instruction is a Q&A-dialogue analysis instruction, the preset model responds to the Q&A-dialogue analysis instruction, so that the preset model is in a state of waiting to execute the objective assessment task under various types of assessment dimensions in the main task module for analyzing Q&A dialogue;
determining the objective assessment task; and
inputting the text to be input and the teaching objective information into the preset model, so that the main task module for analyzing Q&A dialogue executes the objective assessment task based on the text to be input and the teaching objective information, and outputs the assessment result of the classroom to be assessed.

4. The method of claim 3, wherein the main task module for analyzing Q&A dialogue includes an overall assessment subtask module and a local assessment subtask module;
the determining the objective assessment task includes:
acquiring a first type of assessment prompt instruction; wherein the first type of assessment prompt instruction is used to prompt the preset model to output the assessment result of the classroom to be assessed based on an assessment dimension of questioning validity analysis; the assessment dimension of questioning validity analysis includes performing assessment on validity of the teacher questioning in the classroom to be assessed;
determining that a first overall subtask in the overall assessment subtask module and a first local subtask in the local assessment subtask module jointly constitute the objective assessment task based on the first type of assessment prompt instruction; wherein the first overall subtask is used to perform overall assessment on an entirety validity of all teacher questioning in the classroom to be assessed, and the first local subtask is used to make a specific judgment on the validity of each teacher question in the classroom to be assessed;
and/or,
acquiring a second type of assessment prompt instruction; wherein the second type of assessment prompt instruction is used to prompt the preset model to output the assessment result of the classroom to be assessed based on an assessment dimension of knowledge objective; the assessment dimension of the knowledge objective includes performing assessment on correlation between teacher questioning and teaching objective in the classroom to be assessed;
determining that the second overall subtask in the overall assessment subtask module and the second local subtask in the local assessment subtask module jointly constitute the objective assessment task based on the second type of assessment prompt instruction; wherein the second overall subtask is used to perform overall assessment on a preset knowledge objective in the classroom to be assessed, and the second local subtask is used to perform specific assessment on the correlation between teacher question and teaching objective in the classroom to be assessed;
and/or,
acquiring a third type of assessment prompt instruction as the objective assessment task; wherein the third type of assessment prompt instruction is used to prompt the preset model to output the assessment result of the classroom to be assessed based on an assessment dimension of questioning avoidance; wherein the assessment dimension of questioning avoidance include finding out teacher questioning that is cable of being avoided in the classroom to be assessed;
determining that a first local subtask in the local assessment subtask module and a second local subtask in the local assessment subtask module jointly constitute the objective assessment task based on the third type of assessment prompt instruction; wherein the first local subtask is used to make a specific judgment on the validity of each teacher questioning in the classroom to be assessed, and the second local subtask is used to make specific assessment on the correlation between teacher questioning and teaching objective in the classroom to be assessed;
and/or,
acquiring a fourth type of assessment prompt instruction as the objective assessment task; wherein the fourth type of assessment prompt instruction is used to prompt the preset model to output the assessment result of the classroom to be assessed based on the assessment dimension of questioning optimization; the assessment dimension of questioning optimization include finding out teacher questioning that is cable of being optimized in the classroom to be assessed;
determining that a third overall subtask in the overall assessment subtask module and a third local subtask in the local assessment subtask module jointly constitute an objective assessment task based on the fourth type of assessment prompt instruction; wherein the third overall subtask is used to propose an overall optimization suggestion for teacher questioning in the classroom to be assessed, and the third local subtask is used to optimize and rewrite teacher questioning in the classroom to be assessed.

5. The method of any one of claims 1-3, wherein the main task module for analyzing Q&A dialogue includes an overall assessment subtask module and a local assessment subtask module; during a process of performing supervised fine-tuning training on the main task module for analyzing Q&A dialogue, the preset model respectively processes the classroom text containing the teaching objective and the teacher questioning in the educational scenario corpus based on the overall assessment subtask module and the local assessment subtask module to output assessment result for the classroom text.

6. The method of claim 5, wherein the overall assessment subtask module includes a first overall subtask, a second overall subtask, and a third overall subtask; the first overall subtask is used to perform overall assessment on the overall validity of all teacher questioning in the classroom text during the process of supervised fine-tuning training; the second overall subtask is used to perform overall assessment on the preset knowledge objective in the classroom text during the process of supervised fine-tuning training; the third overall subtask is used to propose an overall optimization suggestion for teacher questioning in the classroom text during the process of supervised fine-tuning training; the local assessment subtask module includes a first local subtask, a second local subtask, and a third local subtask; the first local subtask is used to make a specific judgment on the validity of various teacher questioning in the classroom text during the process of supervised fine-tuning training; the second local subtask is used to perform specific assessment on the correlation between the teacher questioning and the teaching objective in the classroom text during the process of supervised fine-tuning training; the third local subtask is used to optimize and rewrite teacher questioning in the classroom text during the process of supervised fine-tuning training.

7. The method of any one of claims 1-4, wherein the acquiring classroom data and classroom objective information of a classroom to be assessed comprises:
acquiring the classroom data of the classroom to be assessed; and
querying the classroom objective information that matches the classroom data from a preset database, or inputting the classroom data into a preset chapter matching model, so that the chapter matching model outputs classroom objective information that matches the classroom data.

8. The method of any one of claims 1-4, wherein the converting the classroom data into a text to be input comprises:
converting the classroom data into the classroom text;
extracting teacher questioning text from the classroom text; and
taking the classroom text and the teacher questioning text as the text to be input.

9. The method of claim 8, wherein the extracting teacher questioning text from the classroom text comprises:
recognizing a dialogue role having the most dialogues in the classroom text;
determining the dialogue role having the most dialogues as a teacher role;
extracting all the dialogue contents of the teacher role; and
screening the teacher questioning text from all the dialogue contents.

10. The method of claim 9, wherein the screening the teacher questioning text from all the dialogue contents comprises:
recognizing a basic question sentence in all the dialogue contents; and
performing de-noising operation on the basic question sentence to obtain the teacher questioning text.

11. A classroom assessment apparatus, comprising:
a data acquiring module configured to acquire classroom data and classroom objective information of a classroom to be assessed; wherein the classroom data includes audio data and/or video data; the classroom objective information includes teaching objective information and curriculum standard information;
a data converting module configured to convert the classroom data into a text to be input;
an instruction receiving module configured to receive an objective analysis instruction of the classroom to be assessed; wherein the objective analysis instruction include a Q&A-dialogue analysis instruction, a classroom-interaction analysis instruction, and a curriculum standard implementation analysis instruction; and
an assessing module configured to input the text to be input and the classroom objective information into a preset model, so that the preset model processes the text to be input and the classroom objective information based on the objective analysis instruction, and outputs an assessment result of the classroom to be assessed; wherein the preset model is obtained by taking educational scenario corpus as a training sample and taking a main task module for analyzing Q&A dialogue, a main task module for analyzing classroom interaction and a main task module for analyzing curriculum standard implementation as jointly trained main tasks to perform supervised fine-tuning training; the main task module for analyzing Q&A dialogue is configured to respond to the Q&A-dialogue analysis instruction, the main task module for analyzing classroom interaction is configured to respond to the classroom-interaction analysis instruction, and the main task module for analyzing curriculum standard implementation is configured to respond to the curriculum standard implementation analysis instruction.

12. An electronic device, comprising:
a processor; and
a memory storing a program or instruction,
wherein the program or instruction, when executed by the processor, performs the classroom assessment method of any one of claims 1-10.

13. A readable storage medium storing a program or instruction, wherein the program or instruction, when executed by a processor, performs the classroom assessment method of any one of claims 1-10.
